(19) Europäisches Patentamt
European Patent Office
Office européen des brevets

(11) EP 0 857 172 B1

# (12) EUROPEAN PATENT SPECIFICATION

(45) Date of publication and mention of the grant of the patent:
**04.08.1999 Bulletin 1999/31**

(21) Application number: **96925156.0**

(22) Date of filing: **20.05.1996**

(51) Int Cl.$^{6}$: **C07F 9/6561**, A61K 31/675

(86) International application number:
**PCT/KZ96/00002**

(87) International publication number:
**WO 97/44343 (27.11.1997 Gazette 1997/51)**

## (54) PHOSPHORUS CONTAINING CYTHESINE DERIVATIVES

PHOSPHORHALTIGE CYTISIN-DERIVATE

DERIVES PHOSPHORES DE CYTISINE

(84) Designated Contracting States:
**AT BE CH DE DK ES FI FR GB GR IE IT LI LU MC NL PT SE**

(43) Date of publication of application:
**12.08.1998 Bulletin 1998/33**

(73) Proprietor: **Vitik, Andrej Zinovyevich**
**Karaganda, 470055 (KZ)**

(72) Inventors:
- **VITIK, Andrej Zinovyevich**
  **Karaganda, 470055 (KZ)**
- **GAZALIEV, Arstan Maulenovich**
  **Karaganda, 470055 (KZ)**
- **GULYAEV, Alexander Evgenyevich**
  **Karaganda, 470032 (KZ)**

(74) Representative:
**von Füner, Alexander, Prof.h.c. Dr. et al**
**v. Füner Ebbinghaus Finck Hano**
**Mariahilfplatz 2 & 3**
**81541 München (DE)**

(56) References cited:
- **IZV. NATS. AKAD. NAUK RESP. KAZ., SER. KHIM. (INRKES);94; (3); PP.80-4, INST. ORG. SINIT. UGLEKHIM.;KARAGANDA; KAZAKHSTAN (KZ), XP002022845 GAZALIEV A M ET AL: "Synthesis and antienzymic activity of new phosphorus-containing derivatives of the alkaloid cytisine"**
- **ZH. OBSHCH. KHIM. (ZOKHA4,0044460X);96; VOL.66 (2); PP.238-239, NAT. ACAD. SCI. KAZAKHSTAN;INST. ORGANIC SYNTHESIS AND COAL CHEMISTRY; KARAGANDA; KAZAKHSTAN (KZ), XP002022846 FAZYLOV S D ET AL: "Formation of N-[(dialkoxyphosphoryl)methyl] derivatives of cytisine and their internal salts under conditions of Kabachnik-Fields reaction"**
- **CHEMICAL ABSTRACTS, vol. 075, no. 17, 25 October 1971 Columbus, Ohio, US; abstract no. 110494, SHAIMARDANOV R A ET AL: "New N-substituted derivatives of cytisine" XP002022847 & KHIM. PRIR. SOEDIN. (KPSUAR);71; VOL.7 (3); PP.383-4, INST. KHIM. RAST. VESCH.;TASHKENT; USSR,**
- **ZH. OBSHCH. KHIM. (ZOKHA4,0044460X);92; VOL.62 (2); PP.456-61, INST. ORG. SINT. UGLEKHIM.;KARAGANDA; RUSSIA (RU), XP000611893 GAZALIEV A M ET AL: "Synthesis and molecular and crystal structure of dimethyl N-cytisinylamidophosphate"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 857 172 B1

## Description

Technical Field.

The invention is related to new chemical compounds, in particular to Phosphorus containing cytisine derivatives showing their hepatoprotective and antienzyme activities.

Background Art.

It is known that alkaloid cytisine (1) extracted firstly from the seeds of broom and thermopsis is now widely used in the medical practise in a state of 0.15% water solution (cytiton) as an anaeleptic agent (Mashkovsky, M.D., "Medicine remedies" M., 1977, v. 1 p. 123).

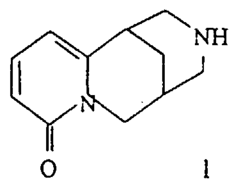

1

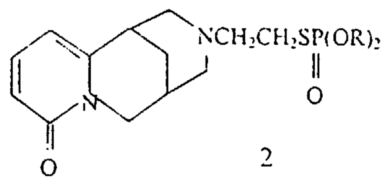

2

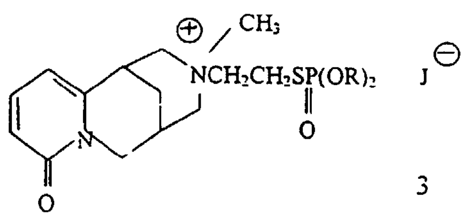

3

where R - $C_{2-5}$

A typical property of cytisine is its ability to arouse breathing, that is connected with reflectory stimulation of breathing centre by intensified impulses coming from carotid balls. Simultaneous stimulation of sympathetic knots and adrenal glands leads to the rise of arterial pressure. In this connection the cytisine is recommended to be used in case of breathing and heart activity stopping at intoxications.

The cytisine is widespread in nature. It has been found in many plants and its extraction from the plant raw material by the ion exchange method is the main industrial way to obtain cytisine.

The synthesis of phosphorus containing N- [β-(dialkocsiphosphenyl) mercaptoethyl] cytisines (2) and their iodine methylates (3) has been described in works (Reports of the Uzbek SSR Academy of Sciences, 1978, N 9, p.p. 39-42; Reports of the Uzbek SSR Academy of Sciences, 1977, N 7, p.p.40-43).

Authors have shown that all synthesized compounds have the irreversible inhibiting activity in a case of acetylcholinesterase and display the effect of selective inhibition of the butyrylcholinesterase catalytic activity.

Evidences on other phosphorus containing cytisine derivatives have not been found by us in literature.

Disclosure of Invention.

In connection with that the initial cytisine alkaloid displays the considerable biological activity, one can assume that other phosphorus containing cytisine derivatives will be of interest from this point of view.

The aim of the declared invention is to obtain new phosphorus containing cytisine derivatives which have in particular the increased biological activity.

The set aim is attained by the fact that the phosphorus containing cytisine derivatives in the general form have been obtained:

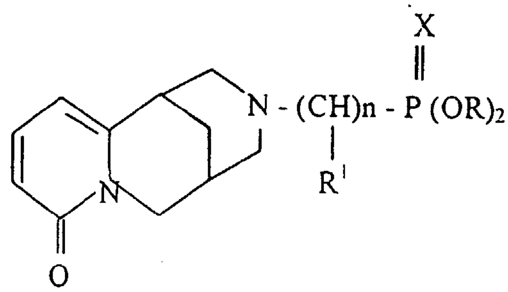

were n - 0; 1 at n -0 X - S;O
$R-CH_3$(a); $C_2H_5$(b); $C_3H_7$(c); i-$C_3H_7$(d);$C_4H_9$(e)
at n - 1 X - O

$R^1$ - 1 - $C_3H7$(a); $C_6H_5$ (6); n - $CH_3O$ 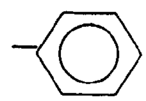 (B)

The synthesis of 0,0-dialkyl-N-cytisinylphosphates (n-O,X-O, compounds 4a-e) was carried out by means of the dialkylphosphite interaction with cytisine under the conditions of Todde-Aterton's reaction according to the following scheme:

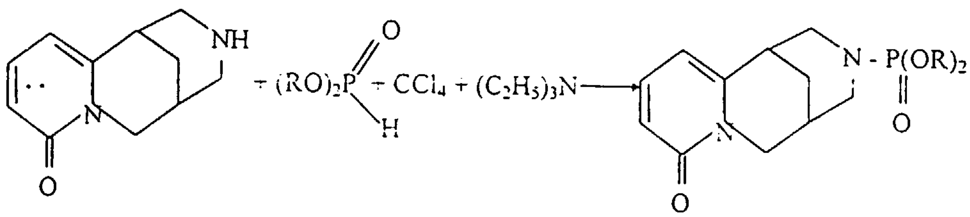


4

The synthesis of 0,-0-dialkyl-N-cytisinylphosphates (n-0, X-S compounds 5a-e) was carried out in two stages. In the first stage, during the cytisine interaction with dialkylphosphite ( the synthesis was described in E .V. Nifantyev's work "Chemistry of phosphorus containing compounds", M. Science, 1983, p.85), in the Benzene medium, the intermediate 0,0-dialkyl-N- cytisenylphosphite which then reacts with equimolar amount of elementary sulphur generating 0,0-dialkyl-N-cytisenylphosphate is formed in the flow of dry argon and in the presence of triethylamine.

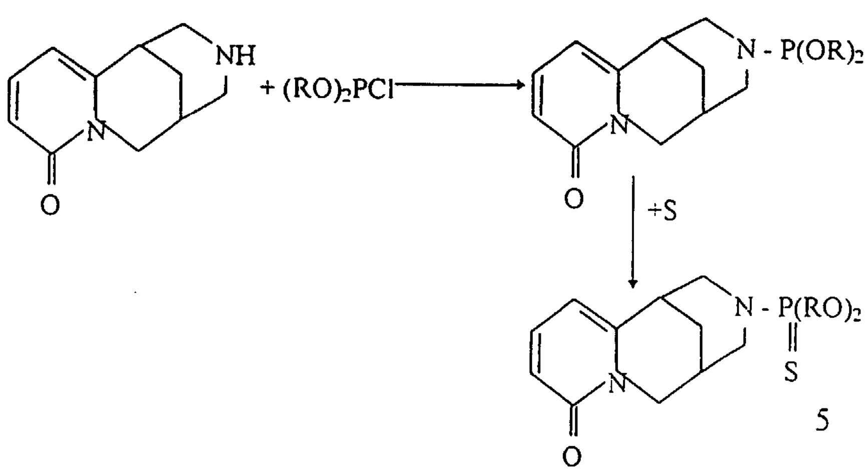


5

Dimethyl-(N- cytisenyl) alkyl (aryl) phosphonates (n-1, X-0, R-$CH_3$ compounds $6_{A\text{-}C}$) have been obtained by means of the cytisine interaction with aldehydes and dimethylphosphite under the conditions of Kabachnic-Fild's reaction

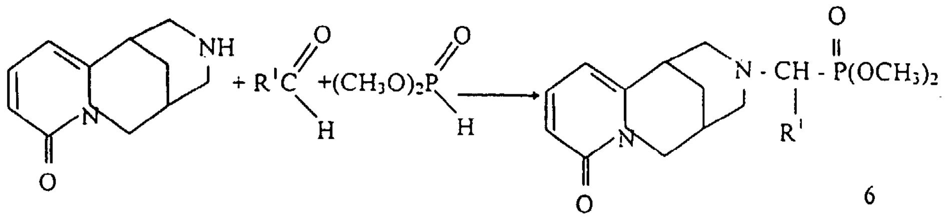

6

Variants of the invention realization.

The following examples explain the invention in more details without restricting it by this.

Examples:

1. The synthesis of 0,-0-dimethyl-N-cytisinephosphate (4a).

Mixture containing 2.86g (0.026 moles) of dimethylphosphite and 15.5ml (0.16 moles) of carbon tetrachloride in 100 ml of benzene is placed into a flask and when stirring, it is added with the mixture containing 5g (0.026 moles) of cytisine and 2.63g (0.026 moles) of triethylamine in 230 ml of dry benzene with such rate that the solution temperature does not exceed 20 degrees Celsius.

After adding completion the reaction mixture is stirred at room temperature for 6 hours. Precipitated crystals of hydrochloric triethylamine are filtered out, solvent is distilled off on a vacuum evaporator. Crystalline substance (overcrystallization from benzene) in amount 5.64g (the yield is 72.5% of theoretical one) with the melting point $T_m$ 158-159 degrees Celsius is obtained.

IR - spectrum, $\nu$ $cm^{-1}$ : 1270(P-O). 1050(P-O-C), 830(P-N-C), 1658(N-CO).

EPR spectrum, $\delta$, m, d. 6.23d, (IH, $CH_\alpha$ ,$^3J_{HH}$ 5.0 Hz), 7.23d.d. (IH, $CH_\beta$, $^3J_{HH}$ 3.2 Hz), 6.12d, (IH, $CH_\gamma$ ) 3.34 d (6H, $CH_3O$, $J_{CH3P}$ 13.2 $H_2$).

NMR $^{31}P$; $\delta_P$ - 9.1 m.d.

| | | | | |
|---|---|---|---|---|
| Found, % | C 52.05; | H 6.24; | N 9.30; | P 10.36; |
| | $C_{13}H_{19}N_2O_4P$ | | | |
| Calculated, % | C 52.36; | H 6.37; | N 9.40; | P 10.40. |

According to the data of X-ray diffraction analysis the coordination of phosphorus atom in 0.01-dimethyl-N-cytisinylphosphate molecule is distorted , tetrahedronic, usual for phosphate groups. Dihydropyridine cycle is flat to an accuracy of ±0.01 A, carbonyl oxygen atom deviates this plane slightly (by 0.07 A).
Tetrahydropyredine cycle takes seat conformation ($\Delta$ $C^8_s$ 2.7°) with the exit of pathway C atom from the middle plane of other ones by 0.75 A. Pyperedine cycle has the almost ideal seat conformation ($\Delta$ C $^8_S$ 0.5). Methyl $CH_3$ groups have Rosh-orientation in respect to P-O and P-O bonds correspondingly.

Other compounds $4_{b\text{-}c}$ of this row Rave been obtained similarly (table 1).

2. Synthesis of 0,0-dimethyl-N- cytisinyltiophosphate (5a) .

5g (0.026 moles) of cytisine and 2.63g (0.026 moles) of triethylamine in 200 ml of absolute benzene are placed into a flask. 3.33g (0.026 moles) of dimethylchlorphosphite are added to the mixture during intensive stirring in the flow

of dry argon and at room temperature. The mixture is stirred for 5 hours. The obtained precipitate of triethylamine hydrochloride is filtered out, flushing it by portions of absolute benzene. Filtrate and calculated amount of sulphur 0.83g (0.026 moles) are placed into the flask and stirring is continued for another 2 hours at room temperature. Then, the mixture is distilled off on a rotor evaporator and precipitate is overcrystallized from benzene. 8.01g (yield is 97%) of crystalline substance with $T_m$ 164-165 degrees Celsius are obtained.

| | |
|---|---|
| IR-spectrum, $\nu$, $cm^{-1}$: | 1030 (P-O-C), 1670(N-CO), 820(P-S). |
| ERR spectrum, $\delta$. m.d. | 6.23d (IH, $CH_\alpha$, $^3J_{HH}$ 6.0 Hz);<br>7.16d.d. (IH, $CH_\beta$, $^3J_{HH}$ 5.8 Hz);<br>5.8d, (IH,$CH_\gamma$),<br>3.40d (6H, $CH_3O$, $JCH_3P$ 12.0Hz). |

NMR $^{31}p$: $\delta_P$ -10.22m.d.

| | | | | |
|---|---|---|---|---|
| Found, % | C 49.91; | H 6.13; | N 8.87; | P 9.69; |
| | $C_{13}H_{19}N_2O_3SP$ | | | |
| Calculated, % | C 49.68; | H 6.05; | N 8.91; | P 9.87. |

Compounds $5_{B-E}$ of this row have been obtained similarly.
Results are presented in Table 1.

Table 1.

Physical and chemical constants and data of element analysis of stated compounds.

| Compound | Tm, $^{0}C$ | $n^{20}$ | FOUND, % | | | | GROSS | Calculated, % | | | | Yield, |
|---|---|---|---|---|---|---|---|---|---|---|---|---|
| | | | C | H | N | P | FORMULA | C | H | N | P | % |
| 4a | 158-159 | - | 52.08 | 6.27 | 9.48 | 10.26 | $C_{13}H_{19}N_2O_4P$ | 52.36 | 6.37 | 9.40 | 10.40 | 72.5 |
| 4b | - | 1.5258 | 55.39 | 7.13 | 8.65 | 9.66 | $C_{15}H_{23}N_2O_4P$ | 55.21 | 7.05 | 8.59 | 9.51 | 68.4 |
| 4c | - | 1.5027 | 57.72 | 7.69 | 7.82 | 8.83 | $C_{17}H_{27}N_2O_4P$ | 57.62 | 7.62 | 7.91 | 8.75 | 69.7 |
| 4d | 115-116 | - | 57.81 | 7.74 | 7.87 | 8.86 | $C_{17}H_{27}N_2O_4P$ | 57.62 | 7.62 | 7.91 | 8.75 | 70.5 |
| 4e | - | 1.4836 | 59.77 | 8.19 | 7.28 | 8.20 | $C_{19}H_{31}N_2O_4P$ | 59.68 | 8.11 | 7.33 | 8.11 | 63.8 |
| 5a | 164-165 | - | 49.91 | 6.18 | 8.87 | 9.69 | $C_{13}H_{19}N_2O_3PS$ | 49.68 | 6.05 | 8.91 | 9.87 | 97.0 |
| 5b | 99-100 | - | 52.72 | 6.79 | 8.14 | 9.17 | $C_{15}H_{23}N_2O_3PS$ | 52.63 | 6.72 | 8.19 | 9.06 | 92.5 |
| 5c | - | 1.5486 | 55.24 | 7.41 | 7.50 | 8.43 | $C_{17}H_{27}N_2O_3PS$ | 55.13 | 7.30 | 7.57 | 8.38 | 87.3 |
| 5d | - | 1.5463 | 55.19 | 7.38 | 7.49 | 8.47 | $C_{17}H_{27}N_2O_3PS$ | 55.13 | 7.30 | 7.57 | 8.38 | 75.1 |
| 5e | - | 1.5446 | 57.38 | 7.86 | 7.01 | 7.91 | $C_{19}H_{31}N_2O_3PS$ | 57.28 | 7.79 | 7.04 | 7.79 | 82.0 |
| 6a | 137-139 | - | 57.70 | 7.72 | 8.03 | 8.67 | $C_{17}H_{27}N_2O_4P$ | 57.56 | 7.58 | 7.90 | 8.52 | 78.1 |
| 6b | 190-192 | - | 61.87 | 6.47 | 7.19 | 7.99 | $C_{20}H_{25}N_2O_4P$ | 61.85 | 6.44 | 7.21 | 7.98 | 85.2 |
| 6c | 186-188 | - | 60.18 | 6.74 | 6.56 | 7.37 | $C_{21}H_{28}N_2O_5P$ | 60.14 | 6.68 | 6.68 | 7.39 | 87.0 |

3.Synthesis of dimethyl-2-(N cytisinyl)-2-isobutylphosphonate (6a).

Mixture containing 3.8g (0.02 moles) of cytisine, 1.2g (0.02moles) of isobutyric aldehyde, 2.2g (0.02 moles) of dimethylphosphite and catalytic amount 18-crown-6 in 100 ml of benzene is boiled for 3 hours with the simultaneous distillution of water formed in the course of reaction. After the solvent distillution when reaction is over, residue is washed by hexane and overcrystallized from benzene-ether mixture. 5.52g (yield is 78.1%) of crystalline substance with melting point $T_m$ 138 degrees Celsius are obtained.

| | |
|---|---|
| IR spectrum, ν, $cm^{-1}$ : | 1220(P-O), 1070(P-O-C), |
| EPR spectrum, δ, m.d. | 6.72d(IH, $CH_\alpha$, $^3J_{HH}$866 $H_Z$); |
| | 7.10 d.d.(IH, $CH_\beta$ $^3J_{HH}$ 664 $H_Z$); |
| | 6.51d.(IH, $CH_\gamma$), |
| | 3.31 (6H, $CH_3O$, $J_{CH3P}$ 12.6 $H_Z$); |
| | 0.50d .(3H, $CH_3$-C), |
| | 0.87d. (3H, $CH_3$-C). |

| | | | | |
|---|---|---|---|---|
| Found, % | C 57.70; | H 7.72; | N 8.03; | P 8.67; |
| | $C_{17}H_{27}N_2O_4P$ | | | |
| Calculated, % | C 57.56; | H 7.58; | N 7.90; | P 8.52 |

Other compounds $6_{B-C}$ of this row have been obtained similarly (Table.1)

Industrial applicability.

Biological activity of stated compounds.

The pharmacology investigations conducted have shown the synthesized compounds to display hepatoprotective and antienzyme activities.

I. The study of hepatoprotective activity.

1. Acute toxicity of the compound.

The average lethal dose of the $LD_{50}$ was determined on white randombrede mice (320 head by 18-20g each). The preparation was injected once intravenously in the physiological solution or perorally in 1% starch suspension. An observation period was 14 days.
General state of animals was examined every day, during the observation period 3 times animals were weighed, descased animals were dissected and macroscopic description was done.

The determination of $LD_{50}$ was carried out by the method of analysis.

As a result of the conducted experiments, it has been found that $ID_{50}$ = 4300 mg/kg (3200-5800) at the peroral injection of the compound and $LD_{50}$ = 1800 mg/kg (1250-2550) at the intravenous one. The average arithmetical value and confidence semi-interval at P = 95% have been presented.

Hepatoprotective activity at the acute toxical rat hepatitis.

According to the opinion of pharmacologysts the most effective hepatoprotective agent is now the preparation "Essentsialle" (FRG) which was used in the following experiments as the comparative preparation. This preparation is a complex set of substances and contains a sum of flavonoids, phospholipides, nicotineamid and various vitamines.

The hepatoprotective activity of the stated preparation at acute toxical hepatitis was studied with 4 groups of white randombredory rat males weighing 120-150 grams by 10 specimens each.

The first group. Animals were subjected to intravenous injection of 0.1 ml isotonic solution of chloride and then in hour they were subjected to intra-abdominal injection of 0.4 ml 40% solution of carbon tetrachloride in petroleum jelly.

The second group. Animals were subjected to intravenous injection of 0.1 ml isotonic solution of sodium chloride and then in hour they were subjected to intra-abdominal injection of 0.4 ml 40% solution of hepatotropic poison - carbon tetrachloride in petroleum jelly.

The third group. Animals were subjected to intravenous injection of 0.1 ml "Essentsialle" solution (50 mg/kg) and then in hour they were subjected to intra-abdominal injection of 0.4 ml 40% $CCl_4$ solution in petrolleum jelly.

The fourth group. Animals were subjected to intravenous injection of 0.1 ml water solution of the stated substance (50 mg/kg) and then, in hour, they were subjected to intra-abdominal injection of 0.4 ml 40% $CCl_4$ in petroleum jelly.

All injections were repeated once a day for the period of 4 days, after that the animals were decapitated under ether narcosis.

The hepatoprotective activity of the stated preparation and the comparative preparation at rat poisoning with carbon tetrachloride was estimated on the base of biochemical and hystological factor changes characterizing the rate of cell damage at poisoning.

The activity of alaninaminotranspherase (ALAT) enxyme and the level of total bilirubin in blood, erythrocyte chemiluminescence filtration, regenerating and distrofied cells in sections of liver tissue were investigated.

At the study of chemiluminescence, the erythrocytes extracted from blood were suspended in isotonic sodium chloride solution (by 1 ml 10% erythrocyte suspension in a sample), glow was stimulated with 0.1 ml 5% $H_2O_2$ and average arithmetic values of an integral area under the curve of chemiluminescence were determined.

| Group | ALAT | | Bilirubin | | Area under the curve of chemiluminescence |
|---|---|---|---|---|---|
| | mmole | hour/litre | micromole/litre | | |
| 1 | 215 | 8.1 | 8.06 | 0.4 | 4.34 |
| 2 | 1828 | 34.6 | 31.12 | 1.09 | 9.395 |
| 3 | 1291 | 10.5 | 20.84 | 0.25 | 7.35 |
| 4 | 445.4 | 11.7 | 12.90 | 0.32 | 5.386 |

| Group | Dystrophy % | Necrosis % | Infiltration % | Regeneration % |
|---|---|---|---|---|
| 1 | 2.6 | 0.2 | 0.35 | 1.4 |
| 2 | 20.5 | 4.3 | 0.6 | 0.652 |
| 3 | 12.8 | 0.9 | 0.4 | 1.03 |
| 4 | 8.2 | 0.5 | 0.3 | 1.48 |

The data presented demonstrates that the stated substance has the hepatoprotective activity at rat intoxication with carbon tetrachloride, it acting more intensively than the "Essentsialle" preparation used as the comparative one.

The effect of the stated substance on the survival rate of mice at their intoxication wich hepatotropic poison.

To study the preparation effect on mouse survival rate at their intoxication with hepatotropic poison the white randombrede mice were used, males weighing 18-20 grams, three groups by 10 mice each.

Animals of the first group were subjected to intraperitoneal injection of 0.1 ml isotonic sodium chloride solution. Animals of the second group were subjected to intravenous injection of 0.1 ml "Essentsialle" solution in a dose 50 mg/kg. Animals of the third group were subjected to intraperitoneal injection of 0.1 ml solution of the stated substance in water solution (100 mg/kg).

In an hour after the first injection all animals were subjected to intraperitoneal injection of 0.1 ml 50% carbon tetrachloride solution in petroleum jelly.

The injections were made once. An observation period was 5 days. The survival rate in 5 days was the following:

| Group | Amount of survived animals | The servival rate |
|---|---|---|
| 1 | 0 | 0 |
| 2 | 2 | 20 |
| 3 | 8 | 80 |

The results obtained show that proposed compound to the greater extent than "Essentsialle"protects animals from death at their intoxication with hepatotropic poison.

Thus, we have found that the stated substance has moderate toxicity and its hepatoprotective action in the animal experiments considerably exceeds the effect of "Essentsialle" preparation.

II. The study of antienzyme activity.

The antienzyme activity of synthesized compounds being investigated, their interactions with acethylcholinestherase (ACT) and butirylcholinestherase (BCE) were studied. ACE from human blood erythrocytes with specific 1.2 Units/mg and BCE from horse blood serum with specific 9,6 Units/mg were used. The ACE and BCE activities were determined by the Ellman calorimetric method at 25 degrees Celsins in 0.2M Na-phosphate buffer, pH = 7.5. Acethyltiocholine iodide of the "Chemapol" firm was used as substrate. Efficiency of reversible inhibitors was determined by the method of A.P.Brestkin and characterised with the value of generalized inhibitory constant (Ki) which at the mixed type of
inhibition is related to competitive (Ki) and uncompetitive ($K^I_i$) components with equation:

$$I/K_i = I/K_i + I/K^I_i.$$

Activity of P450 cytochrome was determined by two methods: with the rate of hydroxylation of 3.4-benz/a/pyrene, by using of fluorimetric determination of forming 4-hydroxybenz/a/pyrene, and with the rate of 7-ethoxyqumarine diethylation by using of fluorimetric determination of 7-hydroxyqumarine formed.

An inhibiting influence of the studied substances on P450 cythochrome was estimated by values $pJ_{50}$ which are inverse logarithms of the agent concentration causing decrease of activity by 50%.

It has been found that cytisinylphosphates and cytisinyltiophosphates are ACE inhibitors with mean power and quite effective BCE inhibitors. The most selectivity relatively to BCE was observed for tiophosphate derivatives (pK1 - 6.7 and pK1 -6.1 correspondingly).

Power inhibitors of P450 cytochrome which are perspective for practical using were revealed, and the compounds with $pJ_{50}$ = 5.55 and $pJ_{50}$ = 5.70 correspondingly are among them.

## Claims

1. Phosphorus containing cytisine derivatives in general formula

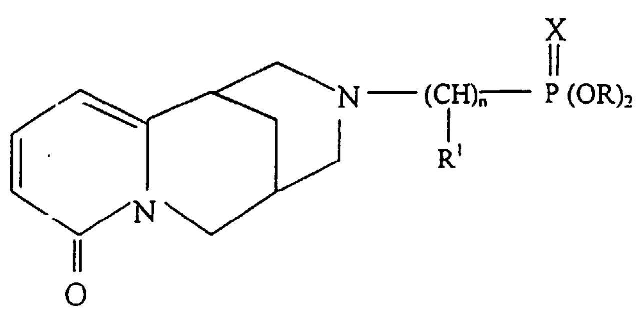

where n=0; 1 at n=0 X=S: O
$R=CH_3$; $C_2H_5$; $C_3H_7$; $i\text{-}C_3H_7$; $C_4H_9$;
at n=1 X=0
$R=CH_3$
$R^1=i\text{-}C_3H_7$; $C_6H_5$;

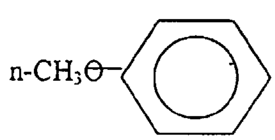

for use as hepatoprotector

2. Phosphorus containing cytisine derivatives of claim 1 in general formula

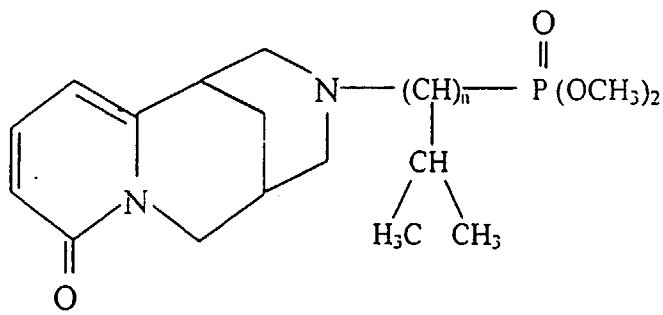

where n=0; 1
for use as hepatoprotector

**3.** Phosphorus containing cytisine derivatives of claim 1, 2 where n=1 for use as a medicament.

**4.** Phosphorus containing cytisine derivatives of claim 1, 2 for use for the manufacture of a medicament for hepatoprotective treatment.

**Patentansprüche**

**1.** Phosphor enthaltende Cytisinderivate der allgemeinen Formel

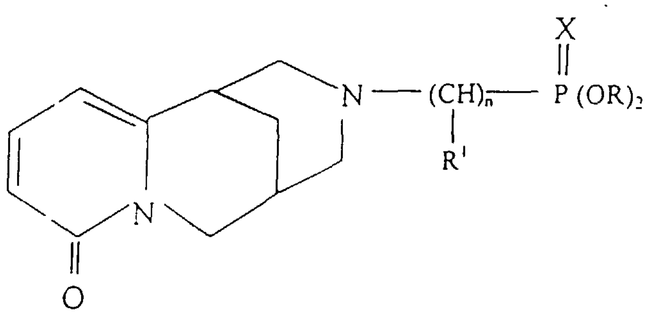

worin n=0;1 wenn n=0 X=S; O
R =$CH_3$ ; $C_2H_5$ ; $C_3H_7$ ; i-$C_3H_7$ ; $C_4H_9$ ;
wenn n=1 X=O
R=$CH_3$
R=i-$C_3H_7$; $C_6H_5$;

; n-$CH_3O$– 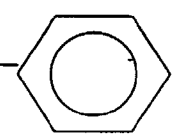

zur Verwendung als Leberschutzmittel.

**2.** Phosphor enthaltende Cytisinderivate nach Anspruch 1 der allgemeinen Formel

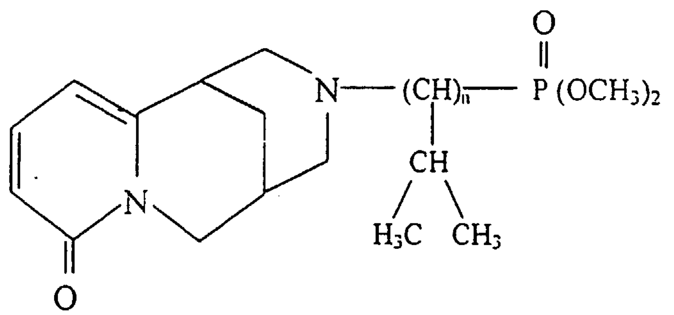

worin n=0; 1
zur Verwendung als Leberschutzmittel.

3. Phosphor enthaltende Cytisinderivate nach den Ansprüchen 1 und 2, worin n=0, zur Verwendung als Medikament.

4. Phosphor enthaltende Cytisinderivate nach den Ansprüchen 1 und 2 zur Verwendung bei der Herstellung eines Medikaments zur Leberschutzbehandlung.

**Revendications**

1. Dérivés de la cytisine, contenant du phosphore, de formule générale

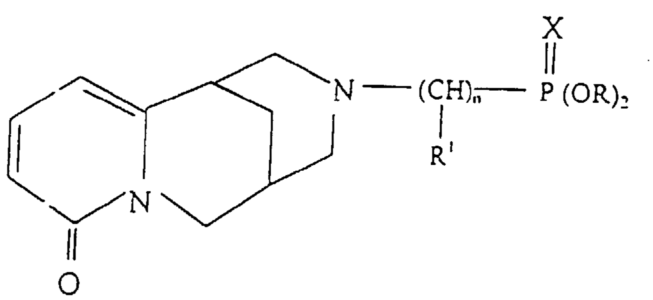

dans laquelle n = 0;1 pour n = 0 X = S:0
$R = CH_3$; $C_2H_5$; $C_3H_7$; i-$C_3H_7$; $C_4H_9$;
pour n = 1 X = 0
$R = CH_3$
$R^1$ = i-$C_3H_7$; $C_6H_5$; n-$CH_3$0
à utiliser comme hépatoprotecteur.

2. Dérivés de la cytisine contenant du phosphore selon la revendication 1, de formule générale

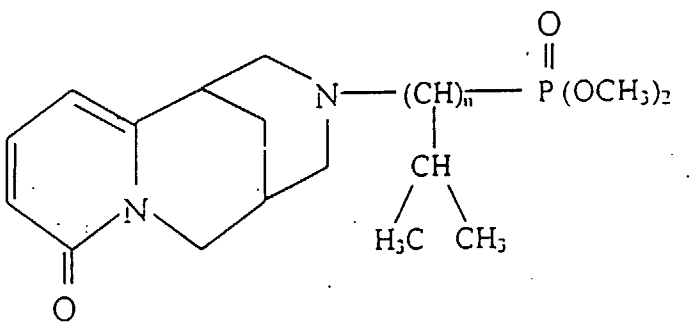

dans laquelle n = 0; 1
à utiliser comme hépatoprotecteur.

3. Dérivés de la cytisine contenant du phosphore selon les revendications 1, 2 où n = 1 à utiliser comme médicament.

4. Dérivés de la cytisine contenant du phosphore selon les revendications 1, 2 à utiliser pour la fabrication d'un médicament pour un traitement hépatoprotecteur.